# EUROPÄISCHE PATENTANMELDUNG

(11) **EP 4 534 324 A1**
(43) Veröffentlichungstag der Anmeldung: **09.04.2025**
(21) Anmeldenummer: 24200536.1
(22) Anmeldetag: 16.09.2024
(51) Int. Cl.: B60L 5/19, B60L 5/26

(54) **STROMABNEHMER FÜR EIN FAHRZEUG UND FAHRZEUG**

(30) Priorität: 28.09.2023 AT 507922023
(71) Anmelder: Siemens Mobility Austria GmbH, 1210 Wien (AT)
(72) Erfinder: Havlicek, Georg, 1190 Wien (AT); Saliger, Christian, 1130 Wien (AT); Perebner, Stefan, 3385 Gerersdorf (AT); Wressnigg, Thomas, 2372 Gießhübl (AT)
(74) Vertreter: Siemens Patent Attorneys

(57) **Zusammenfassung**

Die Erfindung bezieht sich auf einen Stromabnehmer für ein Fahrzeug, insbesondere für ein Schienenfahrzeug, mit einem Stromabnehmergestänge (3) und einer Wippe (4), welche gelenkig mit dem Stromabnehmergestänge (3) gekoppelt ist. Es wird vorgeschlagen, dass eine Parallelführungsvorrichtung (8) des Stromabnehmergestänges (3) gelenkig mit einem Unterarm (5) des Stromabnehmergestänges (3) und über einen Hebel (10) gelenkig mit einem Oberarm (6) des Stromabnehmergestänges (3) verbunden ist, wobei der Oberarm (6) gelenkig mit der Wippe (4) verbunden ist und wobei Auslenkungen des Hebels (10) relativ zu der Wippe (4) begrenzt sind.

Dadurch kann auf eine interne Längenausgleichsfunktion der Parallelführungsvorrichtung (8) verzichtet werden.

## Beschreibung

Die Erfindung betrifft einen Stromabnehmer für ein Fahrzeug, insbesondere für ein Schienenfahrzeug, mit einem Stromabnehmergestänge und einer Wippe, welche gelenkig mit dem Stromabnehmergestänge gekoppelt ist.

Die Erfindung bezieht sich ferner auf ein Fahrzeug mit zumindest einem erfindungsgemäßen Stromabnehmer.

Elektrisch betriebene Fahrzeuge weisen häufig Stromabnehmer (z.B. Einholm- oder Scherenstromabnehmer etc.) auf, mittels welchen eine Stromabnahme von einem Fahrdraht oder von einer Stromschiene etc. sowie eine Versorgung von elektrischen Antrieben der Fahrzeuge mit Elektrizität erfolgt.

Wippen dieser Stromabnehmer müssen in vielen Anwendungen bei Hebe- und Senkvorgängen parallel zu Aufstellflächen der Stromabnehmer gehalten werden. Hierfür sind oft Parallelführungsvorrichtungen (beispielsweise Parallelführungsstangen oder Palettenführungen etc.) der Stromabnehmer erforderlich, wobei erste Enden der Parallelführungsvorrichtungen häufig mit Unterarmen der Stromabnehmer und zweite Enden der Parallelführungsvorrichtungen häufig mit den Wippen verbunden sind. Sobald die Wippen über Kontaktierungsvorrichtungen (z.B. Schleifleisten) Elektrizitätsversorgungseinrichtungen (z.B. Fahrdrähte) kontaktieren, müssen die Wippen in vielen Anwendungen in definierten Ausmaßen dreh- oder kippbar sein, um Fahrdrahtverläufen folgen zu können.

Aus dem Stand der Technik ist beispielsweise die WO 2021/122375 A1 bekannt, welche ein Dach eines Schienenfahrzeugs mit einem darauf angeordneten Stromabnehmer offenbart. Der Stromabnehmer weist ein Stromabnehmergestänge mit einem Oberarm, einem Unterarm sowie weiteren Komponenten auf. An einer Oberseite des Stromabnehmergestänges ist eine Wippe mit Schleifleisten mit dem Stromabnehmergestänge verbunden. Über die Schleifleisten kontaktiert der Stromabnehmer eine Oberleitung. Der Unterarm ist drehbar mit einer Lagervorrichtung gekoppelt, die Lagervorrichtung ist über Stützisolatoren mit dem Dach verbunden. Eine Parallelführungsstange des Stromabnehmergestänges ist gelenkig mit dem Unterarm und gelenkig mit der Wippe verbunden.

Der Erfindung liegt die Aufgabe zugrunde, einen weiterentwickelten Stromabnehmer mit einer konstruktiv einfachen Wippenführung anzugeben, welche in einem an eine Elektrizitätsversorgungseinrichtung angelegten Zustand des Stromabnehmers definierte Bewegungen der Wippe ermöglicht.

Erfindungsgemäß wird diese Aufgabe gelöst mit einem Stromabnehmer nach Anspruch 1, bei dem eine Parallelführungsvorrichtung des Stromabnehmergestänges gelenkig mit einem Unterarm des Stromabnehmergestänges und über einen Hebel gelenkig mit einem Oberarm des Stromabnehmergestänges verbunden ist, wobei der Oberarm gelenkig mit der Wippe verbunden ist und wobei Auslenkungen des Hebels relativ zu der Wippe begrenzt sind.

Durch diese Maßnahme kann auf eine interne Längenausgleichsfunktion der Parallelführungsvorrichtung verzichtet werden. Es sind beispielsweise keine Dämpferelemente für die Parallelführungsvorrichtung notwendig, wodurch ein Wartungs- und Instandhaltungsaufwand reduziert und ein Verzicht auf Spezialkomponenten für die Parallelführungsvorrichtung ermöglicht wird.

Es sind beispielsweise keine aufwendigen Frästeile oder Spezialbolzen etc. zur Realisierung einer Wippenführung für den erfindungsgemäßen Stromabnehmer erforderlich. Zur Realisierung der Wippenführung können bei dem erfindungsgemäßen Stromabnehmer beispielsweise einfache Blechzuschnitte und Normteile eingesetzt werden, welche ohne hohen Aufwand fertigbar sind.

Die Parallelführungsvorrichtung ist über den Hebel gelenkig mit dem Oberarm des Stromabnehmergestänges verbunden, wodurch unmittelbare Reibkontakte zwischen der Parallelführungsvorrichtung und der Wippe vermieden werden. Auf wippeninterne Ausgleichsvorrichtungen zum Ausgleich von Kippbewegungen kann verzichtet werden, wodurch die Wippe des erfindungsgemäßen Stromabnehmers konstruktiv einfach ausgeführt sein kann.

Weitere vorteilhafte Ausgestaltungen des erfindungsgemäßen Stromabnehmers ergeben sich aus den Unteransprüchen. Nachfolgend wird die Erfindung anhand von Ausführungsbeispielen näher erläutert.

Es zeigen beispielhaft:
- Fig. 1:: Einen Seitenriss eines Ausschnitts aus einer beispielhaften Ausführungsvariante eines erfindungsgemäßen Fahrzeugs mit einer beispielhaften ersten Ausführungsvariante eines erfindungsgemäßen Stromabnehmers, wobei eine Parallelführungsvorrichtung des Stromabnehmers über einen Hebel gelenkig mit einem Oberarm des Stromabnehmers verbunden ist, und wobei ein mit dem Hebel verbundener Mitnehmer mittels einer mit einer Wippe des Stromabnehmers verbundenen Führungsvorrichtung geführt ist,
- Fig. 2:: Eine um 90° gedrehte Ansicht eines Ausschnitts aus jener in Fig. 1 dargestellten, beispielhaften ersten Ausführungsvariante eines erfindungsgemäßen Stromabnehmers,
- Fig. 3:: Einen Seitenriss eines Ausschnitts aus einer beispielhaften zweiten Ausführungsvariante eines erfindungsgemäßen Stromabnehmers, wobei eine Parallelführungsvorrichtung des Stromabnehmers über einen Hebel gelenkig mit einem Oberarm des Stromabnehmers verbunden ist, und wobei ein mit einer Wippe des Stromabnehmers verbundener Mitnehmer mittels des als Führungsvorrichtung ausgebildeten Hebels geführt ist, und
- Fig. 4:: Eine um 90° gedrehte Ansicht eines Ausschnitts aus jener in Fig. 3 dargestellten, beispielhaften zweiten Ausführungsvariante eines erfindungsgemäßen Stromabnehmers.

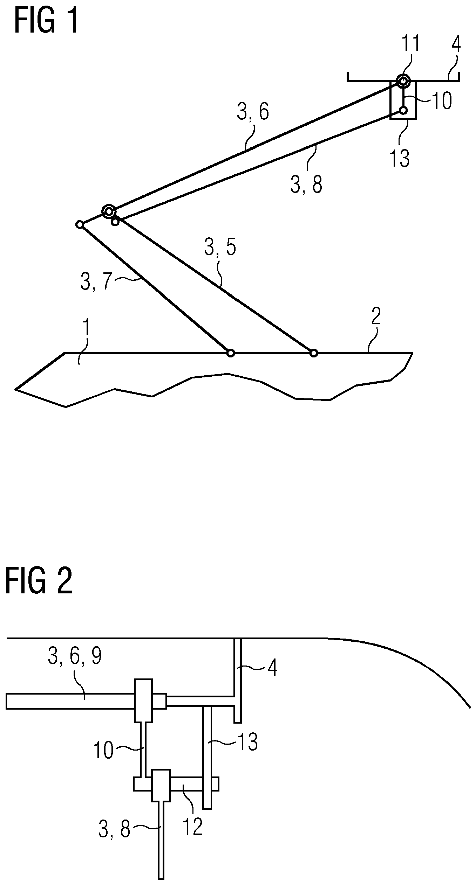

Fig. 1 zeigt einen Seitenriss eines Ausschnitts aus einer beispielhaften Ausführungsvariante eines erfindungsgemäßen Fahrzeugs mit einer beispielhaften ersten Ausführungsvariante eines erfindungsgemäßen Stromabnehmers.

Das Fahrzeug ist als Schienenfahrzeug ausgebildet. Der Stromabnehmer ist auf einem Dach 1 des Schienenfahrzeugs angeordnet. Der Stromabnehmer weist einen Grundrahmen 2, ein Stromabnehmergestänge 3 und eine Wippe 4 auf, wobei die Wippe 4 gelenkig mit dem Stromabnehmergestänge 3 gekoppelt ist. Das Stromabnehmergestänge 3 ist über den Grundrahmen 2 mit dem Dach 1 verbunden. Das Stromabnehmergestänge 3 weist einen Unterarm 5, einen Oberarm 6, eine Kuppelstange 7 und eine als Parallelführungsstange ausgebildete Parallelführungsvorrichtung 8 auf. Der Oberarm 6 umfasst eine beispielhaft in Fig. 2 gezeigte Scheitelstange 9. Erfindungsgemäß ist es auch vorstellbar, dass die Parallelführungsvorrichtung 8 beispielsweise als Parallelführungsrohr ausgeführt ist.

Der Unterarm 5 und die Kuppelstange 7 sind gelenkig mit dem Grundrahmen 2 verbunden, der Oberarm 6 ist gelenkig mit dem Unterarm 5, gelenkig mit der Kuppelstange 7 und, über die Scheitelstange 9, gelenkig mit der Wippe 4 verbunden.

Die Parallelführungsvorrichtung 8 ist gelenkig mit dem Unterarm 5 und über einen Hebel 10 gelenkig mit dem Oberarm 6 verbunden. Auslenkungen des Hebels 10 sind relativ zu der Wippe 4 begrenzt. Der Hebel 10 ist gelenkig mit der Parallelführungsvorrichtung 8 und gelenkig mit der Scheitelstange 9 verbunden.

Die Wippe 4 weist zwei Schleifleisten auf, welche an einen in Fig. 1 nicht gezeigten Fahrdraht angelegt werden können.

Erfindungsgemäß ist es auch vorstellbar, dass der Hebel 10 exzentrisch bezüglich einer Drehachse eines Lagers 11, über welches die Wippe 4 auf dem Stromabnehmergestänge 3 gelagert ist, mit dem Oberarm 6 verbunden ist.

Die Auslenkungen des Hebels 10 sind relativ zu der Wippe 4 mittels einer Begrenzungsvorrichtung begrenzt, welche einen mit dem Hebel 10 fest verbundenen Mitnehmer 12, wie er beispielhaft in Fig. 2 gezeigt ist, sowie eine mit der Wippe 4 fest verbundene, rahmenförmige Führungsvorrichtung 13 umfasst, wobei der Mitnehmer 12 in der Führungsvorrichtung 13 entlang einer begrenzten Führungsbahn geführt ist.

Die Führungsbahn ist als Führungsschlitz der Führungsvorrichtung 13 ausgebildet, in welchem dem Mitnehmer 12 geführt ist.

Erfindungsgemäß ist es auch denkbar, dass der Mitnehmer 12 beispielsweise einstückig mit dem Hebel 10 ausgeführt ist. Weiterhin ist es erfindungsgemäß möglich, dass die Führungsvorrichtung 13 beispielsweise einstückig mit der Wippe 4 ausgeführt ist. Ferner ist es erfindungsgemäß vorstellbar, dass die Führungsbahn beispielsweise als Führungsnut ausgebildet ist.

Erfindungsgemäß ist es weiterhin möglich, dass die Auslenkungen des Hebels 10 relativ zu der Wippe 4 mittels einer mit der Wippe 4 verbundenen oder einstückig mit der Wippe 4 ausgeführten Anschlagvorrichtung begrenzt sind, wobei der Hebel 10 in Endpositionen der Auslenkungen die Anschlagvorrichtung kontaktiert. Die Anschlagvorrichtung kann beispielsweise Anschlagpuffer oder Begrenzungsbalken etc. umfassen.

Darüber hinaus ist es erfindungsgemäß denkbar, dass die Auslenkungen des Hebels 10 relativ zu der Wippe 4 mittels eines Anschlagabschnitts des Hebels 10 begrenzt sind, wobei der Hebel 10 mittels des Anschlagabschnitts in Richtung der Wippe 4 verlängert ist und der Anschlagabschnitt in Endpositionen der Auslenkungen die Wippe 4 kontaktiert. Hierbei kann beispielsweise aus dem Hebel 10 mit dem Anschlagabschnitt eine T-Form gebildet sein, wobei Kragarme der T-Form in Endpositionen der Auslenkungen die Wippe 4 kontaktieren.

In Fig. 2 ist eine um 90° gedrehte Ansicht eines Ausschnitts aus jener in Fig. 1 dargestellten, beispielhaften ersten Ausführungsvariante eines erfindungsgemäßen Stromabnehmers dargestellt.

Es werden daher in Fig. 2 teilweise gleiche Bezugszeichen wie in Fig. 1 verwendet.

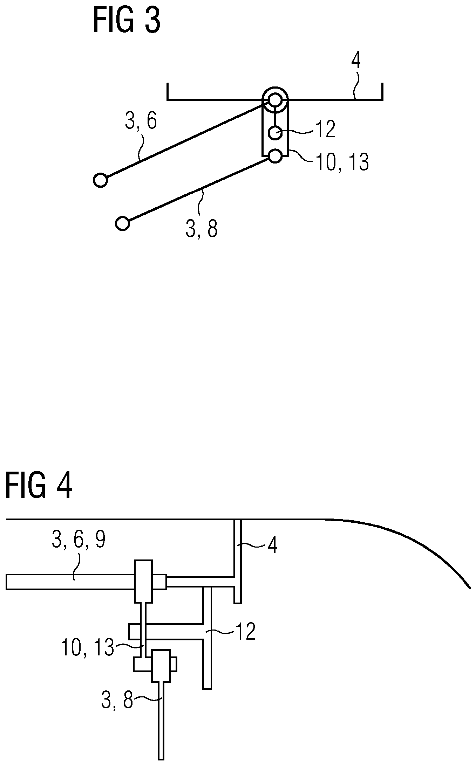

Fig. 3 offenbart einen Seitenriss eines Ausschnitts aus einer beispielhaften zweiten Ausführungsvariante eines erfindungsgemäßen Stromabnehmers.

Diese beispielhafte zweite Ausführungsvariante ähnelt jener beispielhaften ersten Ausführungsvariante eines erfindungsgemäßen Stromabnehmers, wie sie in Fig. 1 und in Fig. 2 gezeigt ist.

Eine Parallelführungsvorrichtung 8 eines Stromabnehmergestänges 3 ist über einen Hebel 10 gelenkig mit einem Oberarm 6 des Stromabnehmergestänges 3 verbunden. Mit dem Stromabnehmergestänge 3 ist eine Wippe 4 des Stromabnehmers verbunden. Der Hebel 10 ist gelenkig mit der Parallelführungsvorrichtung 8 sowie gelenkig mit einer beispielhaft in Fig. 4 gezeigten Scheitelstange 9 des Oberarms 6 verbunden.

Auslenkungen des Hebels 10 relativ zu der Wippe 4 sind mittels einer Begrenzungsvorrichtung begrenzt.

Im Unterschied zu Fig. 1 umfasst die Begrenzungsvorrichtung gemäß Fig. 3 einen mit der Wippe 4 fest verbundenen Mitnehmer 12 sowie den Hebel 10 als rahmenförmige Führungsvorrichtung 13, wobei der Mitnehmer 12 in der Führungsvorrichtung 13 entlang einer begrenzten Führungsbahn geführt ist.

Die Führungsvorrichtung 13 weist einen Führungsschlitz als Führungsbahn auf, in welchem der Mitnehmer 12 geführt ist. Erfindungsgemäß ist es auch denkbar, dass der Mitnehmer 12 beispielsweise einstückig mit der Wippe 4 ausgeführt ist.

In Fig. 4 ist eine um 90° gedrehte Ansicht eines Ausschnitts aus jener in Fig. 3 dargestellten, beispielhaften zweiten Ausführungsvariante eines erfindungsgemäßen Stromabnehmers dargestellt.

Es werden daher in Fig. 4 teilweise gleiche Bezugszeichen wie in Fig. 3 verwendet.

### Liste der Bezeichnungen

- 1: Dach
- 2: Grundrahmen
- 3: Stromabnehmergestänge
- 4: Wippe
- 5: Unterarm
- 6: Oberarm
- 7: Kuppelstange
- 8: Parallelführungsvorrichtung
- 9: Scheitelstange
- 10: Hebel
- 11: Lager
- 12: Mitnehmer
- 13: Führungsvorrichtung

## Patentansprüche

1. Stromabnehmer für ein Fahrzeug, insbesondere für ein Schienenfahrzeug, mit einem Stromabnehmergestänge (3) und einer Wippe (4), welche gelenkig mit dem Stromabnehmergestänge (3) gekoppelt ist, **dadurch gekennzeichnet, dass** eine Parallelführungsvorrichtung (8) des Stromabnehmergestänges (3) gelenkig mit einem Unterarm (5) des Stromabnehmergestänges (3) und über einen Hebel (10) gelenkig mit einem Oberarm (6) des Stromabnehmergestänges (3) verbunden ist, wobei der Oberarm (6) gelenkig mit der Wippe (4) verbunden ist und wobei Auslenkungen des Hebels (10) relativ zu der Wippe (4) begrenzt sind.

2. Stromabnehmer nach Anspruch 1, **dadurch gekennzeichnet, dass** der Hebel (10) gelenkig mit der Parallelführungsvorrichtung (8) und gelenkig mit dem Oberarm (6) verbunden ist.

3. Stromabnehmer nach Anspruch 1 oder 2, **dadurch gekennzeichnet, dass** der Hebel (10) exzentrisch bezüglich einer Drehachse eines Lagers (11), über welches die Wippe (4) auf dem Stromabnehmergestänge (3) gelagert ist, mit dem Oberarm (6) verbunden ist.

4. Stromabnehmer nach einem der Ansprüche 1 bis 3, **dadurch gekennzeichnet, dass** die Auslenkungen des Hebels (10) relativ zu der Wippe (4) mittels einer Begrenzungsvorrichtung begrenzt sind, welche einen mit dem Hebel (10) verbundenen oder einstückig mit dem Hebel (10) ausgeführten Mitnehmer (12) sowie eine mit der Wippe (4) verbundene oder einstückig mit der Wippe (4) ausgeführte Führungsvorrichtung (13) umfasst, wobei der Mitnehmer (12) in der Führungsvorrichtung (13) entlang einer begrenzten Führungsbahn geführt ist.

5. Stromabnehmer nach einem der Ansprüche 1 bis 3, **dadurch gekennzeichnet, dass** die Auslenkungen des Hebels (10) relativ zu der Wippe (4) mittels einer Begrenzungsvorrichtung begrenzt sind, welche einen mit der Wippe (4) verbundenen oder einstückig mit der Wippe (4) ausgeführten Mitnehmer (12) sowie den Hebel (10) als Führungsvorrichtung (13) umfasst, wobei der Mitnehmer (12) in der Führungsvorrichtung (13) entlang einer begrenzten Führungsbahn geführt ist.

6. Stromabnehmer nach Anspruch 4 oder 5, **dadurch gekennzeichnet, dass** die Führungsvorrichtung (13) einen Führungsschlitz oder eine Führungsnut aufweist, in welchem oder in welcher der Mitnehmer (12) geführt ist.

7. Stromabnehmer nach einem der Ansprüche 1 bis 3, **dadurch gekennzeichnet, dass** die Auslenkungen des Hebels (10) relativ zu der Wippe (4) mittels einer mit der Wippe (4) verbundenen oder einstückig mit der Wippe (4) ausgeführten Anschlagvorrichtung begrenzt sind, wobei der Hebel (10) in Endpositionen der Auslenkungen die Anschlagvorrichtung kontaktiert.

8. Stromabnehmer nach einem der Ansprüche 1 bis 3, **dadurch gekennzeichnet, dass** die Auslenkungen des Hebels (10) relativ zu der Wippe (4) mittels eines Anschlagabschnitts des Hebels (10) begrenzt sind, wobei der Hebel (10) mittels des Anschlagabschnitts in Richtung der Wippe (4) verlängert ist und der Anschlagabschnitt in Endpositionen der Auslenkungen die Wippe (4) kontaktiert.

9. Stromabnehmer nach Anspruch 8, **dadurch gekennzeichnet, dass** aus dem Hebel (10) mit dem Anschlagabschnitt eine T-Form gebildet ist, wobei Kragarme der T-Form in Endpositionen der Auslenkungen die Wippe (4) kontaktieren.

10. Stromabnehmer nach einem der Ansprüche 1 bis 9, **dadurch gekennzeichnet, dass** die Parallelführungsvorrichtung (8) als Parallelführungsstange oder Parallelführungsrohr ausgeführt ist.

11. Fahrzeug mit zumindest einem Stromabnehmer nach einem der Ansprüche 1 bis 10.
